(19)

Europäisches
Patentamt
European
Patent Office
Office européen
des brevets

(11) **EP 3 179 710 A1**

(12) **EUROPEAN PATENT APPLICATION**

(43) Date of publication:
**14.06.2017 Bulletin 2017/24**

(51) Int Cl.:
*H04N 1/60* (2006.01)          *H04N 9/67* (2006.01)

(21) Application number: **15306974.5**

(22) Date of filing: **10.12.2015**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**MA MD** | (71) Applicant: **Thomson Licensing**<br>**92130 Issy-les-Moulineaux (FR)**<br><br>(72) Inventor: **Theis, Oliver**<br>**32689 Kalletal (DE)** |

(54) **METHOD AND APPARATUS FOR DETERMINING COEFFICIENTS OF A NONLINEAR COLOR TRANSFORM, METHOD AND APPARATUS FOR APPLYING A NONLINEAR COLOR TRANSFORM TO DIGITAL IMAGES**

(57) For determining coefficients of a nonlinear color transform from a three channel digital image depicting a color reference chart of known properties, it is disclosed to expand three dimensional pixel values of the image into n dimensional values with n>3 by appending products of components of the pixel values as additional dimensions, and to derive, from the n dimensional values and the known properties, coefficients of a 3xn transform matrix by a Least Squares Fitting evaluation. A nine dimensional transform, a 19 dimensional transform, and a special nine dimensional transform are disclosed.

EP 3 179 710 A1

## Description

### Field of the invention

The present invention relates to digital color image processing, in particular to color correction of still or moving images.

### Background of the invention

For image data captured with an RGB sensor, the traditional 3x3 color matrix provides a mathematical description for linearly transforming RGB color data. The 3x3 color matrix is used at all stages of the content production chain from acquisition to reproduction. The coefficients of the color matrix are important parameters, they constitute metadata. In the case of raw image data acquisition, the color matrix of the camera is an important metadata that is preferably stored together with the content. That is one of the reasons why file formats like Adobe's DNG or Cinema DNG do exist.

A large number of linear RGB color transform problems are handled by 3x3 color matrices. The drawback is that only linear problems can be solved through this approach.

Some problems though do have a significant nonlinear component that cannot be handled by linear transformations. Nonlinear Volterra filters have been used in the past to cope with nonlinear filtering problems, e.g. in the domain of optical disc storage and readout.

US 7,286,598 B2 to Kochale et al says it discloses a method for bit recovery in an asymmetric data channel, the method comprising the steps of: providing a non-linear equalization filter with two coefficient sets; using the non-linear equalization filter with a first coefficient set for compensating defects of a first type of transition between different storage states; and using the non-linear equalization filter with a second coefficient set for compensating defects of a second type of transition between different storage states. For the non-linear equalization filter, a Volterra filter is presented as one embodiment.

EP 1 484 760 A1 says it describes a method for reading a recorded signal from an optical medium, the method comprising the steps of providing a discrete read signal, filtering the discrete read signal by means of a Volterra filter, Viterbi decoding the filtered read signal to provide a bit stream, and adapting filter coefficients of the Volterra filter on the basis of the bit stream and the filtered discrete signal.

GUOWEI HONG, et al., "A study of digital camera colorimetric characterization based on polynomial modeling", Color Research & Application | vol.26, no.1 | 76-84, 76, Wiley, , , Feb. 2001 describe an approach for camera characterization, i.e. for deriving a colorimetric mapping between camera RGB signals and CIE tristimulus values using polynomial modelling. Least squares fitting technique is used to derive the coefficients of 3xn polynomial transfer matrices. The performance of camera characterization is investigated under different polynomials. An experiment is described, that is intended to answer the question of whether using more terms in the transfer matrices reduces eye-camera metamerism when a matrix derived by colors of one media is used to predict colors of another media. In this experiment, matrices of 3x3, 3x5 and 3x11 were used for comparing the results.

### Invention

The invention starts with the concept of replacing the traditional 3x3 camera color matrix by a polynomial modelling approach. In a sense, this can be called a Volterra-like approach, because it takes the concept used in the Volterra expansion for consecutive time samples and applies it across the dimensions of a three-dimensional signal rgb. In particular, the resulting expressions are linear in the coefficients, so that techniques like Least Squares Fitting can be used to determine the transform coefficients.

The invention proposes to:

- Determine coefficients of a nonlinear color transform from a picture of a color reference chart of known properties,
- Store the transform coefficients as metadata, together with the image content or separately,
- Apply the nonlinear color transform using the stored coefficients.

For determining the coefficients, the invention proposes to expand three dimensional pixel values of an image that depicts a color chart of known properties into n dimensional values with n>3 by appending products of components of the pixel values as additional dimensions, and to derive, from the n dimensional values and the known properties, coefficients of a 3xn transform matrix by a Least Squares Fitting evaluation.

The known Least Squares Fitting approaches all are based on the concept to choose some parameters in such a way as to minimize a square error between model values and "true" values. For the present context, the "true" values are RGB value triplets of the color patches in the color chart. These true value triplets are assumed to be known as part of the "known properties" of the color chart.

In a metadata driven color processing environment, working with an expanded set of transform coefficients instead of the 9 coefficients of the linear color matrix allows advantageously to compensate camera sensor nonlinearities, so that realistic color reproduction is improved beyond linear transform techniques.

Exemplary embodiments

For mathematical tractability, the color rgb of a digital image sample is usually described as a 3-element column vector referring to a certain color space. In the following, a notation "rgb" will be used, although it must be noted that the principles disclosed here can be applied to samples defined in any color space.

With this notation, a linear color transform of a column vector rgb into a resulting column vector r'g'b' can be modelled as matrix multiplying a 3x3 transform matrix with the column vector rgb of the original sample.

$$r'g'b' = M*rgb$$

In scalar notation, this corresponds to

$$r' = m11 *r + m12*g + m13*b$$

$$g' = m21 *r + m22*g + m23*b$$

$$b' = m31 *r + m32*g + m33*b$$

Thus, the 3x3 matrix of coefficients m11 ... m33 completely describes this color transform.

The nonlinear color transform invented here is based on a Volterra-like expansion, which expands a linear term by higher order terms. The constant term of the Volterra concept is not used here.

For a second order nonlinear transform, first, the column vector of the color sample rgb is expanded by adding to it, as additional dimensions, six dependent components so that the expanded, nine-dimensional column vector is

$$(r, g, b, r*r, r*g, r*b, g*g, g*b, b*b)^{\mathrm{T}}$$

With this, the nonlinear transform can be described as a matrix multiplication of a 3x9 expanded matrix with the 9-dimensional column vector. In this, the expanded matrix equals a juxtaposition of the 3x3 linear transform matrix with a 3x6 matrix Q of the additional, "quadratic" coefficients.

$$r' = m11*r + m12*g + m13*b +$$
$$q11*r*r+q12*r*g+q13*r*b+q14*g*g+q15*g*b+q16*b*b$$

$$g' = m21*r + m22*g + m23*b +$$
$$q21*r*r+q22*r*g+q23*r*b+q24*g*g+q25*g*b+q26*b*b$$

$$b' = m31*r + m32*g + m33*b +$$
$$q31*r*r+q32*r*g+q33*r*b+q34*g*g+q35*g*b+q36*b*b$$

According to the same principles, a third order nonlinear transform can be described as expanding the original column vector rgb into the 19-dimensional column vector

$$c_{19}=(r, \ g, \ b, \ r*r, \ r*g, \ r*b, \ g*g, \ g*b, \ b*b,$$

$$r*r*r, \ r*r*g, \ r*r*b, \ r*g*g, \ r*g*b, \ r*b*b,$$

$$g*g*g, \ g*g*b, \ g*b*b, \ b*b*b)^{\mathrm{T}}.$$

With this, the transform becomes

$$r'g'b' \ = \ (M|Q|C)*c_{19}{}^{\mathrm{T}}$$

with a matrix that is the juxtaposition of the 3x3 linear transform matrix M, the 3x6 matrix Q of quadratic term coefficients, and a 3x10 matrix C of cubic term coefficients.

It was shown that, for a standard color chart captured by an ARRI Alexa camera, the absolute error between the uncorrected captured colors and the ground truth colors is 5.3%, with linear correction the absolute error is 1.56%, and with second order nonlinear correction the absolute error is 1.0%.

The proposed nonlinear transforms are most useful for camera calibration since they allow to compensate nonlinear color behavior. For this, a standard color reference chart is captured, upon which iterative Least Squares Fitting techniques, like LMS or RLS, are used to obtain the matrices M, Q, and C. Once generated, the nonlinear transform constitutes a profile of the used camera in connection with the used lighting. Storing the coefficients M, Q and C as metadata together with the image data or separately is therefore suggested.

A nonlinear color transform as described above may be applicable at any stage of a color processing chain. Especially reproduction devices like LCDs or beamers may have certain nonlinearities that could be compensated. But the need for generation and metadata storage of nonlinear color profiles is primarily seen on the capture side.

A different application might be the use of the described nonlinear transform for creative purposes comparable to a color decision list CDL where the parameters slope, offset and power are defined and stored for each color channel. A special embodiment of a third order nonlinear transform where all mixed component coefficients are zero might be used for this:

$$r' \ = \ m11*r \ + \ q11*r*r \ + \ c11*r*r*r$$

$$g' \ = \ m22*g \ + \ q24*g*g \ + \ c27*g*g*g$$

$$b' \ = \ m33*b \ + \ q36*b*b \ + \ c310*b*b*b$$

This can equivalently be described as expanding the column vectors of the color samples rgb by adding to them, as additional dimensions, six dependent components such as to make the expanded, nine-dimensional column vector as

$$(r, \ g, \ b, \ r*r, \ g*g, \ b*b, \ r*r*r, \ g*g*g, \ b*b*b)^{\mathrm{T}}$$

With this, the nonlinear transform can be described as a matrix multiplication of a 3x9 expanded matrix with the 9-dimensional column vector. In this, the expanded matrix equals a juxtaposition of the 3x3 linear transform matrix with a 3x3 matrix Q of "quadratic" coefficients and a 3x3 matrix C of "cubic" coefficients. Additionally, transform coefficients other than the first, fourth and seventh for the first component, the second, fifth and eighth for the second component, and the third, sixth and ninth for the third component are zero:

| m11 | 0 | 0 | q11 | 0 | 0 | c11 | 0 | 0 |
|---|---|---|---|---|---|---|---|---|
| 0 | m22 | 0 | 0 | q24 | 0 | 0 | c27 | 0 |
| 0 | 0 | m33 | 0 | 0 | q36 | 0 | 0 | c310 |

With other words, the invention proposes a method and apparatus for determining coefficients of a nonlinear color transform, and a method and apparatus for applying a nonlinear color transform to digital images. For determining coefficients of a nonlinear color transform from a three channel digital image depicting a color reference chart of known properties, it is disclosed to expand three dimensional pixel values of the image into n dimensional values with n>3 by appending products of components of the pixel values as additional dimensions, and to derive, from the n dimensional values and the known properties, coefficients of a 3xn transform matrix by a Least Squares Fitting evaluation. A nine dimensional transform, a 19 dimensional transform, and a special nine dimensional transform are disclosed.

**Claims**

1. Method for determining coefficients of a nonlinear color transform from a three channel digital image depicting a color reference chart of known properties, **characterized by**

   - expanding three dimensional pixel values of the image into n dimensional values with n>3 by appending products of components of the pixel values as additional dimensions, and
   - deriving, from the n dimensional values and the known properties, coefficients of a 3xn transform matrix by a Least Squares Fitting evaluation.

2. Apparatus for determining coefficients of a nonlinear color transform from a three channel digital image depicting a color reference chart of known properties, comprising a processor functionally connected to a memory, and **characterized in that** the processor is

   - equipped to expand three dimensional pixel values of the image into n dimensional values with n>3 by appending products of components of the pixel values as additional dimensions,
   - equipped to derive, from the n dimensional values and the known properties, coefficients of a 3xn transform matrix by a Least Squares Fitting evaluation, and
   - equipped to store the coefficients in the memory.

3. The method of Claim 1 or the apparatus of Claim 2, wherein n=9 and for components r, g, b of the pixel values the appended products of components of the pixel values are r*r, r*g, r*b, g*g, g*b, and b*b.

4. The method of Claim 1 or the apparatus of Claim 2, wherein n=19 and for components r, g, b of the pixel values the appended products of components of the pixel values are r*r, r*g, r*b, g*g, g*b, b*b, r*r*r, r*r*g, r*r*b, r*g*g, r*g*b, r*b*b, g*g*g, g*g*b, g*b*b, and b*b*b.

5. The method of Claim 1 or the apparatus of Claim 2, wherein n=9, for components r, g, b of the pixel values the appended products of components of the pixel values are r*r, g*g, b*b, r*r*r, g*g*g, and b*b*b; and transform coefficients other than the first, fourth and seventh for the first component, the second, fifth and eighth for the second component, and the third, sixth and ninth for the third component are zero.

6. Method for applying a nonlinear color transform to digital images, comprising

   - determining coefficients of the nonlinear color transform according to the method of Claim 1,
   - storing the transform coefficients as metadata in a memory,
   - applying the nonlinear color transform to the digital images using the stored coefficients from the memory.

7. Apparatus for applying a nonlinear color transform to digital images,

   - comprising the apparatus comprising a processor functionally connected to a memory of Claim 2, and
   - equipped to apply the nonlinear color transform to the digital images using the stored coefficients from the memory.

**Europäisches Patentamt**
**European Patent Office**
**Office européen des brevets**

# EUROPEAN SEARCH REPORT

Application Number

EP 15 30 6974

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/342557 A1 (FINLAYSON GRAHAM D [GB]) 26 December 2013 (2013-12-26) * equations (11) - (13); paragraphs [0003], [0038] - [0044], [0059] - [0062], [0067] - [0068]; figures 1, 5A, 6, 7 * | 1-7 | INV. H04N1/60 H04N9/67 |
| X | EP 1 032 194 A2 (EASTMAN KODAK CO [US]) 30 August 2000 (2000-08-30) * paragraphs [0018] - [0022], [0030] * | 1-7 | |
| X | US 2012/056910 A1 (SAFAEE-RAD REZA [CA] ET AL) 8 March 2012 (2012-03-08) * paragraphs [0040], [0078]; figures 1,10 * | 1-7 | |

| | |
|---|---|
| | TECHNICAL FIELDS SEARCHED (IPC) |
| | H04N |

The present search report has been drawn up for all claims

| Place of search | Date of completion of the search | Examiner |
|---|---|---|
| Munich | 11 April 2016 | Trimeche, Mejdi |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 15 30 6974

This annex lists the patent family members relating to the patent documents cited in the above-mentioned European search report.
The members are as contained in the European Patent Office EDP file on
The European Patent Office is in no way liable for these particulars which are merely given for the purpose of information.

11-04-2016

| Patent document cited in search report | | Publication date | Patent family member(s) | | Publication date |
|---|---|---|---|---|---|
| US 2013342557 | A1 | 26-12-2013 | NONE | | |
| EP 1032194 | A2 | 30-08-2000 | EP | 1032194 A2 | 30-08-2000 |
| | | | JP | 2000261687 A | 22-09-2000 |
| | | | US | 6310626 B1 | 30-10-2001 |
| US 2012056910 | A1 | 08-03-2012 | CN | 103080999 A | 01-05-2013 |
| | | | EP | 2612316 A2 | 10-07-2013 |
| | | | JP | 2013536956 A | 26-09-2013 |
| | | | KR | 20130052633 A | 22-05-2013 |
| | | | US | 2012056910 A1 | 08-03-2012 |
| | | | US | 2012056911 A1 | 08-03-2012 |
| | | | WO | 2012030718 A2 | 08-03-2012 |
| | | | WO | 2012030719 A2 | 08-03-2012 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7286598 B2, Kochale

- EP 1484760 A1

**Non-patent literature cited in the description**

- A study of digital camera colorimetric characterization based on polynomial modeling. **GUOWEI HONG et al.** Color Research & Application. Wiley, February 2001, vol. 26, 76-84